Europäisches Patentamt

(19) European Patent Office                    (11)  Publication number:        **0 063 348**
                                                                      **B2**
Office européen des brevets

⑫                    NEW  EUROPEAN  PATENT  SPECIFICATION

(45)  Date of publication of the new patent specification:    (51)  Int. Cl.⁴: **C 09 K  5/06**
    **27.01.88**

(21)  Application number: **82103104.4**

(22)  Date of filing: **13.04.82**

(54)  Reversible phase change compositions of calcium chloride hexahydrate with other chlorides.

(30)  Priority: **15.04.81  JP 55719/81**                (73)  Proprietor: **THE DOW CHEMICAL COMPANY, 2030 Dow Center Abbott Road P.O. Box 1967, Midland, MI 48640 (US)**

(43)  Date of publication of application:
    **27.10.82 Bulletin 82/43**                       (72)  Inventor: **Lane, George Ashel, 3802 Wintergreen Drive, Midland Michigan 48640 (US)**
                                                          Inventor: **Rossow, Harold Everett,**
                                                          **Route 10 2888 Poseyville Road, Midland Michigan (US)**
(45)  Publication of the grant of the patent:
    **03.07.85 Bulletin 85/27**

(45)  Mention of the opposition decision:              (74)  Representative: **Hann, Michael, Dr. et al, Patentanwälte Dr. Michael Hann Dr. H.-G. Sternagel Sander Aue 30, D-5060 Bergisch Gladbach 2 (DE)**
    **27.01.88 Bulletin 88/4**

(84)  Designated Contracting States:
    **BE CH DE FR GB IT LI NL SE**

(56)  References cited:                                (56)  References cited: (continuation)
    **EP - A - 0 011 357**                               **The file contains technical information submitted after the application was filed and not included in this specification**
    **EP - B - 0 013 569**
    **DE - A - 2 550 106**
    **GB - A - 2 001 096**
    **JP - A - 51 070 193**
    **JP - A - 51 076 183**
    **JP - A - 53 019 185**
    **JP - A - 53 070 989**
    **JP - A - 55 084 386**
    **JP - A - 55 142 080**
    **JP - A - 56 008 483**
    **SE - B - 410 004**
    **SU - A - 568 669**
    **US - A - 4 189 394**

    Carlsson B. et al. "Solar Energy" 23, 1979 pp. 343-350

ACTORUM AG

## Description

The invention relates to reversible liquid/solid phase change compositions. More particularly, the invention resides in phase change compositions comprising a mixture of hydrated calcium chloride and potassium chloride in which the KCl modifies the semi-congruently melting behavior of $CaCl_2 \cdot 6H_2O$ to the extent that the mixture approaches, and nearly reches, congruent melting behavior. In a preferred application the phase change composition also includes NaCl and/or $SrCl_2 \cdot 6H_2O$ to further modify the $CaCl_2 \cdot 6H_2O$/KCl mixture to thereby obtain a composition which is effectively a congruently melting composition. Optionally, the compositions of the invention also contain select nucleating additives to modify and suppress the supercooling properties of the liquid phase of the phase change compositions.

Phase change materials (PCM's) in which the heat of fusion of various hydrated salt compositions is employed are well known in the literature. In the ASHRAE Journal of September, 1974, entitled SOLAR ENERGY STORAGE, Dr. M. Telkes evaluated the thermal, physical and other pertinent properties of PCM's on the basis of economics, applicability, corrosion, toxicity and availability for large scale installations. Among the materials evaluated were various salt hydrates and their eutectics including $CaCl_2 \cdot 6H_2O$ which undergoes several phase transitions to materials of different crystal structure, i.e. $CaCl_2 \cdot 6H_2O$ to $CaCl_2 \cdot 4H_2O + 2H_2O$ at 29°C.

When heated to a temperature of above 33°C, the salt $CaCl_2 \cdot 6H_2O$ dissolves completely in its water of crystallization. When cooled, formation of four different crystals forms is possible, i.e., $CaCl_2 \cdot 6H_2O$ and three forms of $CaCl_2 \cdot 4H_2O$. If any of the $4H_2O$ crystals form, the heat of the fusion is much less than 193 KJ/kg ($CaCl_2 \cdot 6H_2O$ in substantially pure form undergoes a liquid/solid phase transition at about 30°C releasing or alternately absorbing about 193 KJ of heat per kilogram). Despite the relatively low cost of $CaCl_2$, the formation of its four different crystal forms was deemed to be disadvantageous.

Carlsson et al. in Swedish Patent No. 410 004 claim a method fur suppressing the tetrahydrate formation during repeated melting and crystallization of a system based on $CaCl_2 \cdot 6H_2O$. In a comparative study, Carlsson et al. determined that in solutions in the concentration range of from 48 to 53 weight percent $CaCl_2$, using $CaCl_2 \cdot 6H_2O$ of highest purity, the crystallization temperatures for $CaCl_2 \cdot 6H_2O$ and $CaCl_2 \cdot 4H_2O$ were such that the solution was incongruently melting and the $CaCl_2 \cdot 4H_2O$ crystallized and precipitated out of the solution thus losing its heat storage capacity. By using a solution of the same concentration of $CaCl_2$ of technical grade (Road Salt) containing NaCl and KCl as impurities, the solubility of the tetrahydrate decreased and that of the hexahydrate increased and, on repeated melting and crystallization, the precipitation becomes significant and the system again loses its heat storage capacity. Thus, the conclusion can be drawn that the use of a technical grade (Road Salt) $CaCl_2$ results in a poorer performance due to a relative increase in tetrahydrate formation as compared to a system based on high purity $CaCl_2$. Carlsson et al. discovered that the addition of one or more compounds, including about 2 weight percent $SrCl_2 \cdot 6H_2O$, increased the solubility of the tetrahydrate and suppressed tetrahydrate formation on repeated melting and crystallization. The amount of addition was found to be dependent upon the amount of impurities present in the system (Road Salt), which in an example was determined to be 2.2 weight percent.

The effect of the relative amounts of each impurity in the technical grade salt (Road Salt) on the outcome of the tests conducted was not determined. In fact, the use of Raod Salt was found to be less desirable from the standpoint of tetrahydrate formation compared to $CaCl_2$ of high purity. Neither was there any recognition by Carlsson et al. that impurities of NaCl and KCl in the composition could be beneficial in reducing tetrahydrate crystal formation in such phase change compositions.

The technological problem of the invention is solved by a reversible liquid/solid phase change composition comprising an admixture of hydrated $CaCl_2$ and KCl to modify the semicongruent melting behaviour of $CaCl_2 \cdot 6H_2O$ and to reduce during retrieval of stored heat by crystallization of the mixture the formation of crystalline $CaCl_2$ hydrate phases other than $CaCl_2 \cdot 6H_2O$, characterized in that the content of $CaCl_2$ in said mixture is from 48.0 to 48.5 weight percent, and KCl is added in an amount that the content of KCl is from 4.0 to 8 weight percent with the balance bing $H_2O$ (up to 100 weight percent).

The invention includes the use of the reversible liquid/solid phase change composition according to the invention hermetically sealed in encapsulating means to prevent evaporation of water from the composition in a heat storage device.

The present invention now recognizes that the addition of a predetermined amount of KCl to hydrated $CaCl_2$ substantially reduces the formation of crystal forms other than $CaCl_2 \cdot 6H_2O$ thereby providing a $CaCl_2$/KCl mixture in which the precipitation of crystal forms other than $CaCl_2 \cdot 6H_2O$ on repeated melting and crystallization is substantially reduced. In addition, the hydrated $CaCl_2$/KCl composition of the invention still provides a substantial cost advantage over toother PCM's.

Although the hydrated $CaCl_2$/KCl mixture of the invention surprisingly reduces the formation of crystal forms other than the hexahydrate form, it was found that it still retained the inherent characteristics of the supercooling properties of $CaCl_2 \cdot 6H_2O$. Accordingly, the present invention provides for the addition of select nucleating agents to the mixture thereby substantially improving the supercooling characteristics of the hydrated $CaCl_2$/KCl system.

The avoidance of supercooling during the crys-

tallization of hydrated $CaCl_2$, as by the addition of various nucleating agents, is known in the literature. Nucleating agents are substances upon which the phase change material crystal will grow with little or no supercooling. Accordingly, nucleating agents were not intended as additives to achieve congruently melting salt hydrates. Nucleators for hydrated $CaCl_2$ systems in particular are described in, for example, U.S.S.R. Inventorship Certificate No. 568 669, granted March 3, 1975; Japanese Patent No. 969 909, granted August 31, 1979; and U.S. Patent No. 4 189 394.

The present invention comprises a further improvement over the state of the art in that the nucleators of the invention are selective nucleators that will effectively reduce supercooling in the hydrated $CaCl_2$/KCl system of the present invention.

Preferably the content of KCl in said mixture is from 4.0 to 6.0 weight percent.

Although the addition of KCl to $CaCl_2 \cdot 6H_2O$ effectively reduces the tendency of the phase change composition to form, on freezing, the undesired phase $CaCl_2 \cdot 4H_2O$ by dissolving somewhat less than 8.0 weight percent KCl in the melted $CaCl_2 \cdot 6H_2O$, even this amount is not quite sufficient to prevent completely the formation of $CaCl_2 \cdot 4H_2O$.

According to a preferred embodiment of the invention, the formation of $CaCl_2 \cdot 4H_2O$ can be totally prevented from crystallizing if KCl is used in combination with NaCl and/or $SrCl_2 \cdot 6H_2O$. As hereinafter demonstrated, the addition of $SrCl_2 \cdot 6H_2O$ to $CaCl_2 \cdot 6H_2O$ to the full limit of its solubility does not prevent crystallization of $CaCl_2 \cdot 4H_2O$ during freezing. However, as hereinafter further demonstrated, the addition of KCl plus NaCl using in the composition a weight ratio of NaCl to $CaCl_2$ of from 1:40 to 1:70, preferred of from 1:45 to 1:65; KCl plus $SrCl_2 \cdot 6H_2O$ using in the composition a mole ratio of $H_2O$ to $CaCl_2$ plus $SrCl_2$ of a weight ratio of $SrCl_2 \cdot 6H_2O$ to $CaCl_2$ of from 1:50 to 1:110 preferred of 1:75 to 1:100; or KCl plus NaCl and $SrCl_2 \cdot 6H_2O$, using in the composition a weight ratio of $SrCl_2 \cdot 6H_2O$ plus NaCl to $CaCl_2$ of from 1:40 to 1:70, modifies the phase equilibrium of $CaCl_2 \cdot 6H_2O$ to fully supress the crystallization of $CaCl_2 \cdot 4H_2O$.

More specifically, the present invention represents a significant improvement towards the goal of developing an inexpensive reversible liquid/solid phase change composition based on hydrated $CaCl_2$ in admixture with KCl. The KCl is present in the hydrated $CaCl_2$ in an amount effective to reduce, during retrieval of the stored heat on freezing of the composition, formation of hydrated $CaCl_2$ crystalline phases other than $CaCl_2 \cdot 6H_2O$. The composition of the invention comprises a mixture of from 48.0 to 48.5 weight percent of $CaCl_2$ and preferably from 4.0 to 4.7 weight percent KCl with the balance being $H_2O$ (in an amount of up to 100 weight percent).

The composition can be defined by the ratios also. The weight ratio of KCl to $CaCl_2$ in the composition is from 1:12,13 to 1:5.75. The preferred range of the weight ratio is 1:6 to 1:10 and the most preferred range of the ratio in the composition is from 1:9 to 1:10.

The mole ratio of the $H_2O$ to $CaCl_2$ is about 6:1.

Effective amounts of the selected nucleating agents for the hydrated $CaCl_2$/KCl system of the invention are determined by testing a given composition over repetitive phase change cycles. While the following data illustrate that the nucleating agents produce marked benefits, such amounts should preferably not exceed 2.0 weight percent of the weight of the hydrated $CaCl_2$/KCl mixture. Preferably, the nucleating agents are present in an amount of from 0.005 to 2.0 weight percent, based on the total weight of the composition to reduce supercooling to 5°C or less during retrieval of the stored heat by crystallization. More preferably, the amount of the nucleating agents in the phase change composition is from 0.01 to 1.0 weight percent and most preferably, from 0.10 to 0.50 weight percent. It should be understood, however, that when reference is made to the addition of a given percentage of a nucleating agent, it is in addition to the amounts of ingredients already present in the phase change composition. Accordingly, the existing ingredient percentages are reduced proportionately to accommodate the addition of a nucleating agent.

Hydrated salt phase change materials exhibit three general types of phase/change behavior: congruent, semi-congruent and incongruent melting. The most desirable behavior is congruent melting which occurs when the solid phase change composition (ratio of salt to bound water) is the same as the liquid phase composition. In that case, the hydration/dehydration process appears identical to the melting and freezing process.

The term "effectively congruently melting mixture" herein used defines a mixture of ingredients, based on aqueous calcium chloride, for which, at the melting point, solid and liquid phases are in stable equilibrium: the solid phase containing no hydrated calcium chloride material other than the hexahydrate or solid solutions thereof; and the liquid phase containing, for every mole of calcium chloride, six moles of water, plus sufficient water to form the stable hydrate of any additive materials in solution.

Semi-congruent melting occurs when a phase change material has two or more hydrate forms with differing solid compositions and melting points. The material can be transformed into other hydrate forms before either complete melting or freezing occurs, resulting in a broadened melting point range. In addition, there is a temporary loss in thermal storage capacity. Calcium chloride hexahydrate is an example of a semi-congruently melting phase change material.

Incongruently melting phase change materials yield two distinct phases upon melting: a saturated solution and a precipitate of an insoluble anhydrous salt. If the precipitate settles out of the solution, the anhydrous salt will not hydrate completely upon cooling and some thermal storage capacity will be lost with each freezing/melting cycle. Incongruent melting, as observed with sodium sulfate decahydrate, for example, is a more serious problem because it can result in a continual loss of latent heat storage capacity.

The term "supercooling" refers to a discrepancy between the temperature at which freezing initiates and the melting temperature of a given liquid/solid phase change material when cooled and heated under quiescent conditions.

The term "additives" includes, in addition to nucleating agents such as have been specified hereinbelow, precursors of such additives which are non-detrimental to the function of the phase change materials of the invention. More particularly, the additives herein referred to are either anhydrous or hydrated compositions or inorganic salts or precursor materials which would form the salt upon addition to hydrated calcium chloride.

Impurities may be present in the phase change composition in minor amounts of less than 3.0 weight percent and provided that such impurities do not detrimentally affect the function of the basic hydrated $CaCl_2$/KCl phase change compositions of the invention which may include the hereinafter specified nucleating agents and additives such as NaCl and/or $SrCl_2 \cdot 6H_2O$. Impurities may include, for example, alkaline earth or alkali metal chlorides such as LiCl; $MgCl_2$, or other calcium salts such as $CaSO_4$.

Nucleating agents which have been found to be of particular benefit in the $CaCl_2$/KCl mixture of the present invention are $Ba(OH)_2$, BaO, $BaI_2$, $BaS_2O_3$, $BaCO_3$, $BaCl_2$, $BaF_2$, $BaF_2 \cdot HF$, $SrCl_2$, $Sr(OH)_2$, SrO, $SrCO_3$, $SrF_2$, $SrI_2$ or mixtures thereof. Nucleators selected from $BaCO_3$; $BaCl_2$; BaO; $Ba(OH)_2$; $BaI_2$; $BaSO_4$, $Sr(OH)_2$, $SrCl_2$, SrO, or mixtures thereof are preferred.

Compositions containing $SrCl_2 \cdot 6H_2O$ as an additive are self-nucleating, unless heated to a temperature sufficient to dehydrate the $SrCl_2 \cdot 6H_2O$. Compositions not containing $SrCl_2 \cdot 6H_2O$ as an additive should employ another nucleating additive, unless suitable mechanical means of nucleation are used.

Heat storage compositions of the invention are ideally packaged in individual encapsulating means for use in conjunction with solar heating systems. Exemplary of suitable known encapsulating means for the heat storage compositions herein described are water impervious films or foils of plastic/metal laminates. Closed cell plastic foams have also been suggested in which the PCM may be encapsulated within the cells of the foam structure as illustrated in, for example, US Patent No. 4 003 426. Other useful encapsulating means are concrete, metal or plastic containers, pipes, and the like.

The following examples illustrate the effectiveness of KCl for suppressing the formation of unwanted hydrates in the $CaCl_2 \cdot 6H_2O$/KCl phase change compositions of the invention.

Example 1

In 889 g of a stirred liquid aqueous solution of 44.0 weight percent aqueous $CaCl_2$, saturated with KCl, was brought into equilibrium with solid $CaCl_2 \cdot 6H_2O$ at 24.52°C. The liquid phase contained 44.6 weight percent $CaCl_2$ and 3.16 weight percent KCl.

Stepwise addition of an aqueous solution of 53.7 weight percent $CaCl_2$ and 2.6 weight percent KCl, supplemented on occasion with powdered KCl, resulted in a slurry of solid $CaCl_2 \cdot 6H_2O$ and KCl in equilibrium at 27.26°C with a solution containing 48.21 weight percent $CaCl_2$ and 4.19 weight percent KCl. Further addition of the 53.7/2.6 weight percent $CaCl_2$/KCl solution and powdered KCl yielded a slurry of solid $CaCl_2 \cdot 4H_2O$ and KCl in equilibrium at 27.91°C with a solution analyzing at 48.21 weight percent $CaCl_2$ and 4.48 weight percent KCl.

Further additions of the concentrated $CaCl_2$/KCl solution and solid KCl showed that below a mole ratio of about 5.9:1, $H_2O$:$CaCl_2$, KCl is completely soluble, if a weight ratio of KCl:$CaCl_2$ of 1:10 is maintained. At a 6:1 mole ratio of $H_2O$:$CaCl_2$ and a weight ratio of KCl:$CaCl_2$ of 1:10, the equilibrium melting point of $CaCl_2 \cdot 4H_2O$ is 28.0°C, and of $CaCl_2 \cdot 6H_2O$, 27.3°C. A liquefeld sample of $CaCl_2 \cdot 6H_2O$ of this composition in freezing must cool through a span of only 0.7°C, during which crystallization of $CaCl_2 \cdot 4H_2O$ is possible, before freezing of $CaCl_2 \cdot 6H_2O$ can occur.

Example 2

In the same manner as in Example 1, a sample of aqueous $CaCl_2$ was studied, without the addition of any KCl. At a mole ratio of 6:1, $H_2O$:$CaCl_2$, with no KCl present, the equilibrium melting point of $CaCl_2 \cdot 4H_2O$ is 32.8°C, and of $CaCl_2 \cdot 6H_2O$ is 29.6°C. Thus, a melted sample of $CaCl_2 \cdot 6H_2O$, in cooling, most pass through a span of 3.2°C, during which $CaCl_2 \cdot 4H_2O$ crystallization is possible, before $CaCl_2 \cdot 6H_2O$ freezing can begin.

Summary of Examples 1–2

Table I summarizes the findings of Examples 1–2 as to the equilibrium melting points of the tetrahydrate and hexahydrate of $CaCl_2$.

TABLE I

Effect of potassium chloride on calcium chloride hydrate phases[a]

| KCl/CaCl$_2$ wt. ratio | CaCl$_2 \cdot$ 4H$_2$O m.p., °C | CaCl$_2 \cdot$ 6H$_2$O m.p., °C | CaCl$_2 \cdot$ 4H$_2$O Stable span | Max. amt. CaCl$_2 \cdot$ 4H$_2$O |
|---|---|---|---|---|
| 0[b] | 32.8 | 29.6 | 3.2°C | 9.45% |
| 1:10 | 28.0 | 27.3 | 0.7°C | 1.86% |

[a] 6:1 mole ratio H$_2$:CaCl$_2$
[b] Not an example of the invention–Example 2
m.p.–melting point

Table 1 also shows the maximum theoretical amount of CaCl$_2 \cdot$4H$_2$O that could be formed in the freezing process. This was calculated using the "lever principle", from the peritectic compositions determined in the experiments outlined in Examples 1 to 2. It was surprisingly found that the addition of KCl not only reduces the temperature span within which CaCl$_2 \cdot$4H$_2$O can be formed, but that it also reduces the maximum theoretical conversion of the CaCl$_2 \cdot$4H$_2$O crystal form.

In practice, less than the theoretical amount of CaCl$_2 \cdot$4H$_2$O is obtained. Both supercooling and slow crystal growth rate mitigate against tetrahydrate formation. For example, a composition of Example 1 containing 48.22 weight percent CaCl$_2$, 4.82 weight percent KCl, and 46.96 weight percent H$_2$O would yield no CaCl$_2 \cdot$4H$_2$O whatsoever, if the tetrahydrate supercooled as little as 0.7°C and the hexahydrate were nucleated so as not to supercool. Further, in the experiments described in Example 1 above, it was noted that whenever CaCl$_2 \cdot$4H$_2$O crystals were present, upon each addition of concentrated CaCl$_2$ solution, a much greater time period was required for temperature/composition equilibrium to be established than was the case in Example 2 which dit not contain KCl. This illustrates the slow rate of CaCl$_2 \cdot$4H$_2$O formation.

Example 3

In order to determine the effects of nucleating agents on hydrated CaCl$_2$/KCl heat storage materials, a number of 80 gram samples of CaCl$_2 \cdot$6H$_2$O were prepared with varying levels of KCl added to the CaCl$_2 \cdot$6H$_2$O. Selected nucleating agents were added to the hydrated CaCl$_2$/KCl mixture to study their effects on supercooling.

For comparison, a control sample was prepared without the addition of a nucleating agent to the hydrated CaCl$_2$/KCl storage material. The control sample contained 48.2 weight percent CaCl$_2$; 4.8 weight percent KCl and 47.0 weight percent water. In 4 of 10 freeze-thaw cycles, the control sample completely failed to freeze. In the remaining 6 cycles, an average supercooling temperature of greater than 14°C was detected.

The results of the effect of KCl on barium salt nucleators for CaCl$_2 \cdot$6H$_2$O are summarized in Table II.

TABLE II

| Nucleator | | Supercooling, °C, average | |
|---|---|---|---|
| Compound | Wt.% | No KCl[a] | KCl:CaCl$_2$ 1:10 |
| None[a] | — | — | >14 |
| Ba(OH)$_2$ | 2.00 | — | 2.5 |
| Ba(OH)$_2$ | 1.00 | — | 4.9 |
| Ba(OH)$_2$ | 0.50 | 0.0 | 9.5 |
| Ba(OH)$_2$ | 0.10 | 0.16 | — |
| Ba(OH)$_2$ | 0.05 | 0.55 | — |
| Ba(OH)$_2$ | 0.01 | 1.92 | — |
| Ba(OH)$_2$ | 0.005 | 4.45 | — |
| BaO | 1.00 | — | >11 |
| BaO | 0.50 | — | 12.4 |
| BaO | 0.10 | 0.40 | — |
| BaO | 0.05 | 1.45 | — |
| BaO | 0.01 | 12.0 | — |
| BaI$_2$ | 1.00 | — | >15 |
| BaI$_2$ | 0.50 | — | 13.3 |
| BaI$_2$ | 0.10 | 0 | — |
| BaI$_2$ | 0.05 | 0.4 | — |
| BaI$_2$ | 0.01 | 4.7 | — |
| BaSO$_4$ | 1.00 | — | >16 |
| BaSO$_4$ | 0.50 | — | 17.7 |
| BaSO$_4$ | 0.10 | 0.26 | — |
| BaSO$_4$ | 0.05 | 7.4 | — |
| BaCO$_3$ | 1.00 | — | >14 |
| BaCO$_3$ | 0.50 | — | 11.9 |
| BaCO$_3$ | 0.10 | 0 | — |
| BaCO$_3$ | 0.05 | 0 | — |
| BaCO$_3$ | 0.01 | 0.1 | — |
| BaCO$_3$ | 0.005 | 6.0 | — |
| BaCl$_2$ | 1.00 | — | >15 |
| BaCl$_2$ | 0.50 | 0 | 12.3 |
| BaCl$_2$ | 0.10 | 1.03 | — |
| BaCl$_2$ | 0.01 | 1.38 | — |

[a] Not an example of the invention.

From Table II, it is evident that, in the absence of KCl, the amount of supercooling decreased as the level of the barium salt nucleator was increased. At a level of 0.5 weight percent, no supercooling was observed. In the case of BaCO$_3$ substantially no supercooling was observed at a

level as low as 0.01 weight percent. For examples containing KCl, the effectiveness of the nucleators diminished and a higher level of supercooling was observed as the KCl level was raised. Accordingly, it is evident from the data that higher levels of nucleators must be added in the presence of KCl to control supercooling. When the ratio of KCl:CaCl$_2$ reached 1:10, it was found that the addition of a nucleator at that level produced no further benefits in reducing the level of supercooling. It would therefor be impractical to rely solely on any one of a select barium salt or barium salt mixture to control supercooling at a KCl:CaCl$_2$ ratio of 1:10 or greater.

The effects of strontium salt nucleators on the hydrated CaCl$_2$/KCl composition of the invention are illustrated in Table III.

TABLE III
Effect of KCl on strontium salt nucleators
for CaCl$_2 \cdot$ 6H$_2$O

| Nucleator | | Supercooling, °C, average | |
|---|---|---|---|
| Compound | Wt.% | No KCl | KCl:CaCl$_2$ 1:10 |
| None | — | — | >14 |
| SrCl$_2$ | 2.00 | — | 0.1 |
| SrCl$_2$ | 1.00 | 0 | — |
| SrCl$_2$ | 0.50 | 6.3 | — |
| SrCl$_2$ | 0.10 | >15 | — |
| Sr(OH)$_2$ | 0.50 | 0 | 0 |
| Sr(OH)$_2$ | 0.10 | 0.95 | — |
| Sr(OH)$_2$ | 0.05 | — | — |
| Sr(OH)$_2$ | 0.02 | 15.85 | — |

Table III illustrates that at the 2.0 weight percent level of SrCl$_2$, the amount of supercooling can be reduced nearly to zero, even in the presence of the maximum level of KCl. In the case of Sr(OH)$_2$, the addition of 0.5 weight percent surprisingly eliminated supercooling completely, even at the highest ratio of KCl:CaCl$_2$ of 1:10.

Table IV shows the combined effect of barium salts and strontium salts on supercooling of hydrated CaCl$_2$ and KCl heat storage compound.

TABLE IV
Combined effect of binary nucleators
on CaCl$_2 \cdot$ 6H$_2$O

| Nucleator | | Supercooling, average, °C | |
|---|---|---|---|
| Compound | Wt.% | No KCl[a] No SrCl$_2$ | KCl:CaCl$_2$:SrCl$_2$ 10:100:1 |
| Ba(OH)$_2$ | 1.00 | — | 0 |
| Ba(OH)$_2$ | 0.50 | 0 | 4.2 |
| Ba(OH)$_2$ | 0.10 | 0.18 | — |
| Ba(OH)$_2$ | 0.05 | 0.69 | — |
| Ba(OH)$_2$ | 0.01 | 1.92 | — |

TABLE IV (Fortsetzung)

| | | | |
|---|---|---|---|
| BaO | 0.50 | 0 | 3.8 |
| BaO | 0.10 | 0.32 | — |
| BaCO$_3$ | 0.50 | (b) | 3.3 |
| BaSO$_4$ | 0.50 | (b) | 6.3 |
| BaCl$_2$ | 0.50 | 0 | 0.4 |
| BaCl$_2$ | 0.10 | 0.40 | — |
| BaCl$_2$ | 0.01 | — | — |
| BaI$_2$ | 0.50 | (b) | 7.0 |
| None | — | 11.9 | — |

(a) Not an example of the invention
(b) Assumed to be 0, since the lower level of nucleator yielded 0° supercooling

From Table IV, it will be noted that the presence of the binary barium/strontium salt nucleator had the unexpected property of suppressing supercooling even in the presence of a high level of KCl. Very little difference was observed between the results for nucleated pur CaCl$_2 \cdot$ 6H$_2$O and nucleated CaCl$_2 \cdot$ 6H$_2$O containing KCl and SrCl$_2$. Since KCl is known to reduce the effectiveness of barium salts, the lack of supercooling can be attributed to the action of SrCl$_2$ in reversing the effect of KCl on nucleators.

Table V illustrates the most effective combination of barium salt or strontium salt nucleators, or mixtures thereof, and weight percentages on supercooling of KCl/CaCl$_2$ mixtures at ratio of 1:10.

TABLE V

| Nucleator(s) | | Supercooling, °C, average |
|---|---|---|
| Compound | Weight percent | KCl:CaCl$_2$=1:10 |
| BaCl$_2$ | 0.5 | 0.4 |
| SrCl$_2$ | 0.5 | |
| Sr(OH)$_2$ | 0.5 | 0.0 |

As dicussed hereinbefore, the addition of SrCl$_2 \cdot$ 6H$_2$O to the full limit of its solubility in CaCl$_2 \cdot$ 6H$_2$O does not prevent the crystallization of CaCl$_2 \cdot$ 4H$_2$O during freezing of such composition. When SrCl$_2 \cdot$ 6H$_2$O is added, the melting point of CaCl$_2 \cdot$ 6H$_2$O increases (due to formation of an isomorphous solid solution), and the melting point of CaCl$_2 \cdot$ 4H$_2$O decreases. Again, the freezing process is like that for pure CaCl$_2 \cdot$ 6H$_2$O, except that less tetrahydrate can form, and that solid solution freezes in place of the hexahydrate. At the solubility limit of about 1.0 weight percent SrCl$_2 \cdot$ 6H$_2$O, freezing of the tetrahydrate begins at 32.2°C, and the peritectic reaction isotherm is at 30.6°C. It is estimated that if about 2.1 weight percent SrCl$_2 \cdot$ 6H$_2$O were dissolved, no tetrahydrate could form. However, the limit of solubility is about 1.0 weight percent. Accordingly, the effect of $SrCl_2 \cdot 6H_2O$ on the freezing of $CaCl_2 \cdot 6H_2O$ is a predicted by Carlsson, et al. but because of the solubility limit of $SrCl_2 \cdot 6H_2O$ their predicted results cannot be achieved.

In accordance with the present invention, it has surprisingly been found that about 0.8 weight percent NaCl can be added to $CaCl_2 \cdot 6H_2O$ saturated with KCl. This reduces the melting point of $CaCl_2 \cdot 6H_2O$, but reduces faster the melting point of $CaCl_2 \cdot 4H_2O$. The combined effect of the two additives is to prevent any tetrahydrate formation. The mixture melts at 27.0°C. The $CaCl_2 \cdot 6H_2O/CaCl_2 \cdot 4H_2O$ eutectic point is at 27.0°C at the $CaCl_2 \cdot 5.98H_2O$ stoichiometry.

In accordance with the invention, it has also been surprisingly found that when KCl is added to $CaCl_2 \cdot 6H_2O$ saturated with $SrCl_2 \cdot 6H_2O$, the melting point decreases. That of the tetrahydrate is affected more than that of the hexahydrate. The following data indicate that about 3.25 weight percent KCl will effectively prevent tetrahydrate formation. The solubility limit is about 4.75 weight percent, so that there is no problem in obtaining the necessary concentation. The mixture, saturated with KCl and $SrCl_2 \cdot 6H_2O$, melts at 27.8°C. The hexahydrate/tetrahydrate eutectic point is at 27.6°C and $CaCl_2 \cdot 5.91H_2O$ stoichiometry.

Further, in accordance with the invention, it has been found that about 4.8 weight percent KCl, plus 0.3 weight percent NaCl, plus 0.8 weight percent $SrCl_2 \cdot 6H_2O$ are soluble in $CaCl_2 \cdot 6H_2O$ and that tetrahydrate crystallization is completely prevented. The mixture melts at 27.5°C. There is a eutectic point at 27.4°C at the stoichiometry $(CaCl_2 + SrCl_2) \cdot 5.82H_2O$.

In Example 2, it has been demonstrated that for $CaCl_2 \cdot 6H_2O$ without additives, considerable tetrahydrate formation is possible during freezing.

In Example 1, it has been demonstrated that by saturating $CaCl_2 \cdot 6H_2O$ with KCl, the potential for tetrahydrate formation is reduced markedly and that KCl surprisingly modified the semi-congruently melting behaviour of $CaCl_2 \cdot 6H_2O$ to the extent that the mixture nearly reaches congruent melting behavior.

Example 4

The following Examples involves saturation of $CaCl_2 \cdot 6H_2O$ with NaCl. It shows there is but a slight effect on the potential formation of tetrahydrate from this additive alone.

In the same procedural manner as in Example 2, 1230 g of a 47.47 weight percent aqueous $CaCl_2$ solution and 12.4 g NaCl powder were mixed and brought to equilibrium with solid $CaCl_2 \cdot 6H_2O$ at 28.13°C. The liquid phase contained 47.28 weight percent $CaCl_2$, 52.43 weight percent $H_2O$, and 0.29 weight percent NaCl by analysis.

Stepwise addition of an aqueous solution of 55.15 weight percent $CaCl_2$ resulted in a slurry of solid $CaCl_2 \cdot 6H_2O$ and NaCl in metastable equilibrium at 29.40°C with a solution of 49.92 weight percent $CaCl_2$, 49.84 weight percent $H_2O$, and 0.24 weight percent NaCl, by analysis. Further addition of the 55.15 weight percent solution of $CaCl_2$ yielded a slurry of solid $CaCl_2 \cdot 4H_2O$ and NaCl in equilibrium at 31.48°C with a solution of 50.14 weight percent $CaCl_2$, 49.60 weight percent $H_2O$, and 0.26 weight percent NaCl.

Further additions of the concentrated $CaCl_2$ solution showed that at a 6:1 mole ratio of $H_2O:CaCl_2$, saturated with NaCl, the equilibrium melting point of $CaCl_2 \cdot 4H_2O$ is 32.8°C, and the metastable equilibrium melting point of $CaCl_2 \cdot 6H_2O$ is 29.4°C. A liquefied sample of $CaCl_2 \cdot 6H_2O$ of this composition, in freezing, must cool through a span of 3.4°C, during which the crystallization of $CaCl_2 \cdot 4H_2O$ is possible, before freezing of $CaCl_2 \cdot 6H_2O$ can begin. Thus, saturation with NaCl causes a slight increase in the tendency to form tetrahydrate.

Example 5

This Example involves saturation of $CaCl_2 \cdot 4H_2O$ with both KCl and NaCl, and it is an example of the present invention. It shows that although NaCl addition causes a slight increase in $CaCl_2 \cdot 4H_2O$ formation, and KCl addition markedly reduces, but does not eliminate $CaCl_2 \cdot 4H_2O$ formation, the combination of KCl and NaCl additives totally supresses tetrahydrate formation.

In the same procedural manner as in Example 1, 898 g of a mixture of 46 weight percent $CaCl_2$, 47 weight percent $H_2O$, 6 weight percent KCl, and 1 weight percent NaCl was heated, cooled, and brought to equilibrium at 26.02°C. $CaCl_2 \cdot 6H_2O$, KCl, and NaCl crystals were in equilibrium with a solution of 45.65 weight percent $CaCl_2$, 49.5 weight percent $H_2O$, 3.9 weight percent KCl, and 9.95 weight percent NaCl.

Stepwise addition of an aqueous solution of 53.0 weight percent $CaCl_2$, 5.5 weight percent KCl, and 41.5 weight percent $H_2O$ resulted in a slurry of $CaCl_2 \cdot 6H_2O$ in equilibrium at 26.90°C with a solution containing 47.90 weight percent $CaCl_2$, 46.6 weight percent $H_2O$, 4.7 weight percent KCl, and 0.83 weight percent NaCl. Further addition of the 53.0/5.5 weight percent $CaCl_2/KCl$ solution and 5 g powdered NaCl yielded a slurry of $CaCl_2 \cdot 4H_2O$ in equilibrium at 27.82°C with a solution analyzing 48.15 weight percent $CaCl_2$, 46.2 weight percent $H_2O$, 4.8 weight percent KCl, and 0.86 weight percent NaCl.

Further addition of the concentrated $CaCl_2/KCl$ solution, powdered NaCl, and powdered KCl demonstrated that at a 6:1 mole ratio of $H_2O:CaCl_2$, saturated with KCl and NaCl, the equilibrium melting point of $CaCl_2 \cdot 6H_2O$ is 27.0°C, and the metastable equilibrium melting point of $CaCl_2 \cdot 4H_2O$ is about 26.7°C. A liquefied sample of $CaCl_2 \cdot 6H_2O$ of this composition, in freezing, will crystallize to solid $CaCl_2 \cdot 6H_2O$, without the possibility of $CaCl_2 \cdot 4H_2O$ formation.

Example 6

This Example is not an example of the invention and demonstrates that $CaCl_2 \cdot 6H_2O$ saturated

with $SrCl_2 \cdot 6H_2O$ decreases but cannot eliminate the potential for tetrahydrate formation.

In the same procedural manner as in Example 2, 748 g of a mixture of 45 weight percent $CaCl_2$, 53 weight percent $H_2O$, and 2 weight percent $SrCl_2$ was heated, cooled, and brought to equilibrium at 25.91°C. Crystals of $SrCl_2 \cdot 2H_2O$ and $CaCl_2 \cdot 6H_2O/SrCl_2 \cdot 6H_2O$ solid solution were in equilibrium with liquid analyzing 44.18 weight percent $CaCl_2$, 55.37 weight percent $H_2O$, and 0.55 weight percent $SrCl_2$.

Stepwise addition of a solution of 54.3 weight percent $CaCl_2$, 43.7 weight percent $H_2O$, and 2.0 weight percent $SrCl_2$ resulted in a slurry of $CaCl_2 \cdot 6H_2O/SrCl_2 \cdot 6H_2O$ solid solution and $SrCl_2 \cdot 2H_2O$ crystals in metastable equilibrium at 30.28°C with liquid analyzing 50.08 weight percent $CaCl_2$, 49.22 weight percent $H_2O$, and 0.70 weight percent $SrCl_2$.

Further stepwise addition of concentrated $CaCl_2/SrCl_2$ solution, followed by cooling, resulted in a slurry of $CaCl_2 \cdot 4H_2O$ and $SrCl_2 \cdot 2H_2O$ in equilibrium at 30.50°C with liquid analyzing 49.70 weight percent $CaCl_2$, 49.66 weight percent $H_2O$, and 0.50 weight percent $SrCl_2$.

Further experiments of this type showed that at a mole ratio of 6:1 of $H_2O:(CaCl_2+SrCl_2)$, the equilibrium melting point of $CaCl_2 \cdot 4H_2O$ is 32.1°C, and the metastable equilibrium melting point of a $CaCl_2 \cdot 6H_2O$ (solid solution) is 30.4°C. A liquefied sample of $CaCl_2 \cdot 6H_2O$ of this composition, in freezing must cool through a span of 1.7°C, during which $CaCl_2 \cdot 4H_2O$ can freeze, before crystallization of $CaCl_2 \cdot 6H_2O$ can begin. Thus, $SrCl_2 \cdot 6H_2O$ additive reduces the tendency of the tetrahydrate to form (roughly by half), but does not prevent it entirely.

Example 7

The following example involves the saturation of $CaCl_2 \cdot 6H_2O$ with both KCl and $SrCl_2 \cdot 6H_2O$, and is an example of the present invention. This Example demonstrates that the addition of both KCl and $SrCl_2 \cdot 6H_2O$ to $CaCl_2 \cdot 6H_2O$ totally reduces tetrahydrate formation.

In the same procedural manner as in Example 2, 757 g of a mixture of 43.4 weight percent $CaCl_2$, 4.3 weight percent KCl, 1.9 weight percent $SrCl_2$, and 50.3 weight percent $H_2O$ was heated, cooled, and brought to equilibrium at 27.18°C. Crystals of KCl, $SrCl_2 \cdot 2H_2O$ and $CaCl_2 \cdot 6H_2O/ SrCl_2 \cdot 6H_2O$ were in equilibrium in a liquid which was analyzed to contain 44.21 weight percent $CaCl_2$, 3.9 weight percent KCl, 1.15 weight percent $SrCl_2$, and 50.7 weight percent $H_2O$.

Stepwise addition of a solution containing 51.7 weight percent $CaCl_2$, 5.2 weight percent KCl, 1.0 weight percent $SrCl_2$ and 42.2 weight percent $H_2O$ led to a slurry of $CaCl_2 \cdot 6H_2O/SrCl_2 \cdot 6H_2O$ solid solution, $SrCl_2 \cdot 6H_2O$ and KCl crystals in equilibrium at 27.68°C. The liquid was analyzed to contain 47.57 weight percent $CaCl_2$, 47.02 weight percent $H_2O$, 4.65 weight percent KCl, and 0.76 weight percent $SrCl_2$.

Further stepwise additions of concentrated $CaCl_2/KCl/SrCl_2$ solution, followed by cooling, led to a slurry of $CaCl_2 \cdot 4H_2O$, $SrCl_2 \cdot 2H_2O$, and KCl in equilibrium at 27.54°C. The liquid was analyzed to contain 48.03 weight percent $CaCl_2$, 46.45 weight percent $H_2O$, 4.9 weight percent KCl, and 0.62 weight percent $SrCl_2$.

Further experiments of this type showed that at a mole ratio of 6:1 of $H_2O:(CaCl_2+SrCl_2)$, the equilibrium melting point of $CaCl_2 \cdot 6H_2O$ (solid solution) is 27.8°C, and the metastable equilibrium melting point of $CaCl_2 \cdot 4H_2O$ is about 27°C. A liquefied sample of $CaCl_2 \cdot 6H_2O$ of this composition, in freezing, will crystallize to cristalline $CaCl_2 \cdot 6H_2O/SrCl_2 \cdot 6H_2O$ solid solution without the possibility of tetrahydrate formation.

Example 8

This Example illustrates saturation of $CaCl_2 \cdot 6H_2O$ with KCl, $SrCl_2 \cdot 6H_2O$, and NaCl, and is an example of the present invention. Since tetrahydrate crystallization in $CaCl_2 \cdot 6H_2O$ can be suppressed by adding $KCl+SrCl_2$ or $KCl+NaCl$, but not $SrCl_2+NaCl$, this Example surprisingly demonstrates that addition of all three salts would be beneficial in completely suppressing the tetrahydrate formation.

In the same procedural manner as in Example 2, 761 g of a mixture of 43.16 weight percent $CaCl_2$, 49.52 weight percent $H_2O$, 4.37 weight percent KCl, 1.96 weight percent $SrCl_2$, and 0.99 weight percent NaCl was heated, cooled, and brought to equilibrium at 26.62°C. Crystals of $CaCl_2 \cdot 6H_2O/SrCl_2 \cdot 6H_2O$, $SrCl_2 \cdot 2H_2O$, KCl, and NaCl were in equilibrium. The liquid was analyzed to contain 43.98 weight percent $CaCl_2$, 50.78 weight percent $H_2O$, 3.90 weight percent KCl, 1.02 weight percent $SrCl_2$, and 0.32 weight percent NaCl.

Stepwise addition of a solution containing 51.8 weight percent $CaCl_2$, 41.5 weight percent $H_2O$, 5.2 weight percent KCl, 1.0 weight percent $SrCl_2$, and 0.5 weight percent NaCl led to a slurry of $CaCl_2 \cdot 6H_2O/SrCl_2 \cdot 6H_2O$, $SrCl_2 \cdot 2H_2O$, KCl, and NaCl in equilibrium at 27.56°C. The liquid was analyzed to contain 47.52 weight percent $CaCl_2$, 46.62 weight percent $H_2O$, 4.75 weight percent KCl, 0.83 weight percent $SrCl_2$, and 0.28 weight percent NaCl.

Futher stepwise addition of the concentrated $CaCl_2/KCl/SrCl_2/NaCl$ solution led to a slurry of $CaCl_2 \cdot 4H_2O$, $SrCl_2 \cdot 2H_2O$, KCl, and NaCl in equilibrium. The liquid was analyzed to contain 48.48 weight percent $CaCl_2$, 45.68 weight percent $H_2O$, 5.33 weight percent KCl, 0.84 weight percent $SrCl_2$, and 0.26 weight percent NaCl, at a temperature of 27.77°C.

At a mole ratio of 6:1 of $H_2O:(CaCl_2+SrCl_2)$, the equilibrium melting point of $CaCl_2 \cdot 6H_2O$ (solid solution) is 27.5°C, and the metastable equilibrium melting point of $CaCl_2 \cdot 4H_2O$ is about 26°C. A liquefied sample of $CaCl_2 \cdot 6H_2O$ of this composition, in freezing, will crystallize to solid $CaCl_2 \cdot 6H_2O/SrCl_2 \cdot 6H_2O$ solid solution without the possibility of tetrahydrate formation.

Table VI summarizes the results of previous Examples 1 and 2 and new Examples 4 through 8 and the effects of additives on calcium hydrate phase at a 6:1 mole ratio, $H_2O:(CaCl_2+SrCl_2)$, saturated with the indicated additive(s).

TABLE VI

Effect of additives on calcium chloride hydrate phases

| Additive | $CaCl_2 \cdot 4H_2O$ m.p., °C | $CaCl_2 \cdot 6H_2O$ m.p., °C | $CaCl_2 \cdot 4H_2O$ Stable span |
|---|---|---|---|
| 1 KCl | 28.0 | 27.3 | 0.7°C |
| 2 none | 32.8 | 29.6 | 3.2°C |
| 4 NaCl | 32.8 | 29.4 | 3.4°C |
| 5 KCl+NaCl | 26.7 | 27.0 | none |
| 6 $SrCl_2$ | 32.1 | 30.4 | 1.7°C |
| 7 KCl+$SrCl_2$ | 27 | 27.8 | none |
| 8 KCl+$SrCl_2$+NaCl | 26 | 27.5 | none |

Example 9

As a further demonstration of the elimination of $CaCl_2 \cdot 4H_2O$ formation by the present invention, and as a comparison with other means of tetrahydrate suppression, a number of $CaCl_2 \cdot 6H_2O$ compositions with additives were prepared. These samples were melted, and cooled to a temperature barely above the melting point of $CaCl_2 \cdot 6H_2O$, as determined by the experiments in the preceding Examples. After a period of equilibration, a seed crystal of $CaCl_2 \cdot 4H_2O$ was added, and its effect observed. If formation of tetrahydrate were possible for these compositions, the seed crystal would persist or grow. Otherwise, it would dissolve. The results of these experiments are illustrated in Table VII in which the $CaCl_2 \cdot 4H_2O$ seeding was conducted at a 6:1 mole ratio of $H_2O:(CaCl_2+SrCl_2)$, saturated with the indicated additive(s). These results confirm the present invention.

TABLE VII

| Additive | Temp. °C | Result of seeding |
|---|---|---|
| KCl | 27.5 | $CaCl_2 \cdot 4H_2O$ growth |
| $SrCl_2$ | 31.0 | $CaCl_2 \cdot 4H_2O$ growth |
| KCl+$SrCl_2$[a] | 27.8 | Seed dissolved |
| KCl+NaCl[a] | 26.9 | Seed dissolved |

[a] Examples of the present invention.

Example 10

The experiment of Example 8 was repeated, using a sample prepared by following the procedures of Swedish Patent No. 410 004.

128 Grams of $CaCl_2 \cdot 6H_2O$ was prepared, containing 50.66 weight percent $CaCl_2$ and 49.34 weight percent $H_2O$. Then 2.97 g (2 percent by weight) $SrCl_2 \cdot 6H_2O$ was added and dissolved at 60°C. After equilibration at 32°C for 23 hours, the solution was filtered, and the test of Example 11 was performed at 30.6°C. Seeds of $CaCl_2 \cdot 4H_2O$ grew in the solution. After two days the remaining liquid was found to contain 49.30 percent $CaCl_2$, 50.31 percent $H_2O$, and 0.39 percent $SrCl_2$ by weight, a mole ratio of 6.252:1 of $H_2O:(CaCl_2+SrCl_2)$.

This experiment demonstrates that the composition is not a congruently melting composition.

**Claims**

1. A reversible liquid/solid phase change composition comprising an admixture of hydrated $CaCl_2$ and KCl to modify the semicongruent melting behaviour of $CaCl_2 \cdot 6H_2O$ and to reduce during retrieval of stored heat by crystallization of the mixture the formation of crystalline $CaCl_2$ hydrate phases other than $CaCl_2 \cdot 6H_2O$, characterized in that the content of $CaCl_2$ in said mixture is from 48.0 to 48.5 weight percent, and KCl is added in an amount that the content of KCl is from 4.0 to 8 weight percent with the balance being $H_2O$ (up to 100 weight percent).

2. The composition of Claim 1, characterized in that the content of KCl in said mixture is from 4.0 to 6.0 weight percent.

3. The composition of Claims 1 to 2, characterized by an amount of NaCl that the weight ratio of NaCl to $CaCl_2$ in the composition is from 1:40 to 1:70.

4. The composition of Claims 1 to 3, characterized by an amount of $SrCl_2 \cdot 6H_2O$ that the weight ratio of $SrCl_2 \cdot 6H_2O$ to $CaCl_2$ in the composition is from 1:50 to 1:110.

5. The composition of Claim 3, characterized in that the weight ratio of NaCl to $CaCl_2$ in the composition is from 1:45 to 1:65.

6. The composition of Claim 4, characterized in that the mole ratio of $H_2O$ to $CaCl_2$ plus $SrCl_2$ in the composition is about 6:1.

7. The composition of Claim 4, characterized in that the weight ratio of $SrCl_2 \cdot 6H_2O$ to $CaCl_2$ in the composition is from 1:75 to 1:100.

8. The composition of Claim 4, characterized in that the weight ratio of $SrCl_2 \cdot 6H_2O$ plus NaCl to $CaCl_2$ in the composition is from 1:40 to 1:70.

9. The composition of any one of the preceding claims, characterized by one or more nucleating agents in said composition in an amount of from 0.005 to 2.0 weight percent to reduce supercooling to 5°C or less during retrieval of the stored heat by crystallization.

10. The composition of Claim 9, characterized in that the nucleating agent is present in an amount of from 0.10 to 1.0 weight percent.

11. The composition of Claims 9 or 10, characterized in that said nucleating agent is selected from one or more salts of barium or strontium.

12. The composition of Claims 9, 10 or 11, characterized in that said nucleating agent is selected from $Ba(OH)_2$, $BaO$, $BaI_2$, $BaSO_4$, $BaS_2O_3$, $BaCO_3$, $BaCl_2$, $BaF_2$, $BaF_2 \cdot HF$, $SrCl_2$, $Sr(OH)_2$, $SrO$, $SrCO_3$, $SrF_2$, $SrI_2$, or mixtures thereof.

13. The composition of Claim 12, characterized in that said nucleating agent is selected from $Ba(OH)_2$; $BaO$; $BaI_2$; $BaSO_4$; $BaCO_3$; $BaCl_2$; $SrCl_2$; $Sr(OH)_2$; or mixtures thereof.

14. The composition of any one of the preceding claims, characterized in that impurities are present in said composition in an amount of less than 3.0 weight percent.

15. Use of the reversible liquid/solid phase change composition of any of the preceeding claims hermetically sealed in encapsulating means to prevent evaporation of water from the composition in a heat storage device.

## Patentansprüche

1. Eine den Zustand flüssig/fest reversibel ändernde Zusammensetzung, enthaltend eine Mischung von hydratisiertem $CaCl_2$ und KCl, um das semikongruente Schmelzverhalten von $CaCl_2 \cdot 6H_2O$ zu modifizieren und die Bildung von anderen kristallinen $CaCl_2$ Hydratphasen als $CaCl_2 \cdot 6H_2O$ während des Wiedergewinnens von gespeicherter Wärme durch Kristallisation der Mischung zu verringern, dadurch gekennzeichnet, dass der Gehalt von $CaCl_2$ in der Mischung von 48,0 bis 48,5 Gew.% beträgt und KCl in einer solchen Menge zugesetzt ist, dass der KCl-Gehalt von 4,0 bis 8 Gew.% beträgt, wobei der Rest $H_2O$ (bis zu 100 Gew.%) ist.

2. Zusammensetzung nach Anspruch 1, dadurch gekennzeichnet, dass der KCl-Gehalt in der Mischung von 4,0 bis 6,0 Gew.% beträgt.

3. Zusammensetzung nach Ansprüchen 1 bis 2, gekennzeichnet durch einen solchen Anteil von NaCl, dass das Gewichtsverhältnis von NaCl zu $CaCl_2$ in der Zusammensetzung von 1:40 bis 1:70 beträgt.

4. Zusammensetzung nach Ansprüchen 1 bis 3, gekennzeichnet durch einen solchen Anteil von $SrCl_2 \cdot 6H_2O$, dass das Gewichtsverhältnis von $SrCl_2 \cdot 6H_2O$ zu $CaCl_2$ in der Zusammensetzung von 1:50 bis 1:110 beträgt.

5. Zusammensetzung nach Anspruch 3, dadurch gekennzeichnet, dass das Gewichtsver-

hältnis von NaCl zu $CaCl_2$ in der Zusammensetzung von 1:45 bis 1:65 beträgt.

6. Zusammensetzung nach Anspruch 4, dadurch gekennzeichnet, dass das Molverhältnis von $H_2O$ zu $CaCl_2$ plus $SrCl_2$ in der Zusammensetzung etwa 6:1 beträgt.

7. Zusammensetzung nach Anspruch 4, dadurch gekennzeichnet, dass das Gewichtsverhältnis von $SrCl_2 \cdot 6H_2O$ zu $CaCl_2$ in der Zusammensetzung von 1:75 bis 1:100 beträgt.

8. Zusammensetzung nach Anspruch 4, dadurch gekennzeichnet, dass das Gewichtsverhältnis von $SrCl_2 \cdot 6H_2O$ plus NaCl zu $CaCl_2$ in der Zusammensetzung von 1:40 bis 1:70 beträgt.

9. Zusammensetzung nach jedem der vorstehenden Ansprüche, gekennzeichnet durch einen oder mehrere keimbildende Stoffe in der Zusammensetzung in einer Menge von 0,005 bis 2,0 Gew.%, um die Unterkühlung auf 5°C oder weniger während der Wiedergewinnung von gespeicherter Wärme durch Kristallisation zu verringern.

10. Zusammensetzung nach Anspruch 9, dadurch gekennzeichnet, dass der keimbildende Stoff in einer Menge von 0,10 bis 1,0 Gew.% anwesend ist.

11. Zusammensetzung nach Ansprüchen 9 oder 10, dadurch gekennzeichnet, dass der keimbildende Stoff aus einem oder mehreren Salzen des Bariums oder Strontiums ausgewählt ist.

12. Zusammensetzung nach Ansprüchen 9, 10 oder 11, dadurch gekennzeichnet, dass der keimbildende Stoff aus $Ba(OH)_2$, $BaO$, $BaI_2$, $BaSO_4$, $BaS_2O_3$, $BaCO_3$, $BaCl_2$, $BaF_2$, $BaF_2 \cdot HF$, $SrCl_2$, $Sr(OH)_2$, $SrO$, $SrCO_3$, $SrF_2$, $SrI_2$ oder Mischungen dieser Stoffe ausgewählt ist.

13. Zusammensetzung nach Anspruch 12, dadurch gekennzeichnet, dass der keimbildende Stoff aus $Ba(OH)_2$, $BaO$, $BaI_2$, $BaSO_4$, $BaCO_3$, $BaCl_2$, $SrCl_2$, $Sr(OH)_2$ oder Mischungen dieser Stoffe ausgewählt ist.

14. Zusammensetzung nach jedem der vorstehend genannten Ansprüche, dadurch gekennzeichnet, dass in der Zusammensetzung Verunreinigungen in einer Menge von weniger als 3,0 Gew.% vorhanden sind.

15. Verwendung der den Zustand flüssig/fest reversibel ändernden Zusammensetzung nach jedem der vorstehenden Ansprüche in hermetisch verschlossenen Einkapselungseinrichtungen, um die Verdampfung von Wasser aus der Zusammensetzung in Wärmespeichereinrichtungen zu verhindern.

## Revendications

1. Composition à changement reversible de phase liquide/solide comprenant un mélange de $CaCl_2$ hydraté et de KCl pour modifier, lors de la fusion de $CaCl_2 \cdot 6H_2O$, le comportement dans lequel il présente plusieurs formes hydratées de compositions solides différentes et de points de fusion différents, et pour diminuer la formation des phases de $CaCl_2$ hydraté cristallisé autres que $CaCl_2 \cdot 6H_2O$ pendant la récupération, au cours de la cristallisation du mélange, de la chaleur emmagasinée, caractérisée en ce que la teneur de $CaCl_2$ dans ledit mélange est de 48.0 à 48.5 pour cent en poids; et en ce que l'on ajoute une quantité de KCl telle que la teneur en KCl est de 4.0 à 8 pour cent en poids, le restant étant $H_2O$ (pour compléter à 100 pour cent en poids).

2. Composition selon la revendication 1, caractérisée en ce que la teneur en KCl dans ledit mélange est de 4.0 à 6.0 pour cent en poids.

3. Composition selon les revendications 1 à 2, caractérisée par une teneur en NaCl telle que le rapport en poids de NaCl à $CaCl_2$ dans la composition est de 1:40 à 1:70.

4. Composition selon les revendications 1 à 3, caractérisée par une teneur en $SrCl_2 \cdot 6H_2O$ telle que le rapport en poids de $SrCl_2 \cdot 6H_2O$ à $CaCl_2$ dans la composition est de 1:50 à 1:110.

5. Composition selon la revendication 3, caractérisée en ce que le rapport en poids de NaCl à $CaCl_2$ dans la composition est de 1:45 à 1:65.

6. Composition selon la revendication 4, caractérisée en ce que le rapport molaire de $H_2O$ à $CaCl_2$ plus $SrCl_2$ dans la composition est d'environ 6:1.

7. Composition selon la revendication 4, caractérisée en ce que le rapport en poids de $SrCl_2 \cdot 6H_2O$ à $CaCl_2$ dans la composition est de 1:75 à 1:100.

8. Composition selon la revendication 4, caractérisée en ce que le rapport en poids de $SrCl_2 \cdot 6H_2O$ plus NaCl à $CaCl_2$ dans la composition est de 1:40 à 1:70.

9. Composition selon l'une des revendications précédentes, caractérisée par la présence, dans la composition, d'un ou plusieurs agents favorisant la formation de germes cristallins, dans une teneur allant de 0.005 à 2.0 pour cent en poids, pour limiter la surfusion à 5°C ou moins pendant la récupération, au cours de la cristallisation, de la chaleur accumulée.

10. Composition selon la revendication 9, caractérisée en ce que l'agent favorisant la formation de germes cristallins est présent en une teneur allant de 0.10 à 1.0 pour cent en poids.

11. Composition selon la revendication 9 ou 10, caractérisée en ce que l'on choisit ledit agent favorisant la formation de germes cristallins parmi un ou plusieurs sels de baryum ou de strontium.

12. Composition selon la revendication 9, 10 ou 11, caractérisée en ce que l'on choisit ledit agent favorisant la formation de germes cristallins parmi $Ba(OH)_2$, BaO, $BaI_2$, $BaSO_4$, $BaS_2O_3$, $BaCO_3$, $BaCl_2$, $BaF_2$, HF, $SrCl_2$, $Sr(OH)_2$, SrO, $SrCO_3$, $SrF_2$, $SrI_2$, ou leurs mélanges.

13. Composition selon la revendication 12, caractérisée en ce que l'on choisit ledit agent favorisant la formation de germes cristallins parmi $Ba(HO)_2$; BaO; $BaI_2$; $BaSO_4$; $BaCO_3$; $BaCl_2$; $SrCl_2$; $SR(OH)_2$; ou leurs mélanges.

14. Composition selon l'une des revendications précédentes, caractérisée en ce que des impuretés sont présentes dans ladite composition en une teneur inférieure à 3.0 pour cent en poids.

15. Utilisation, dans un dispositif d'accumulation de la chaleur, de la composition à changement réversible de phase liquide/solide selon l'une quelconque des revendications précédentes, hermétiquement renfermée dans un moyen d'encapsulation pour empêcher que l'eau ne s'échappe de la composition par évaporation.